# EUROPEAN PATENT SPECIFICATION

(11) **EP 3 045 739 B1**
(45) Date of publication and mention of the grant of the patent: **04.12.2019**
(21) Application number: 15151284.5
(22) Date of filing: 15.01.2015
(51) Int. Cl.: F16B 21/08, B29C 67/00

(54) **Fastening element, fastening assembly and method for manufacturing a fastening element**
Befestigungselement, Befestigungsanordnung und Verfahren zur Herstellung eines Befestigungselements
Élément de fixation, système de fixation et procédé de fabrication d'un élément de fixation

(43) Date of publication of application: 20.07.2016
(73) Proprietor: Airbus Operations GmbH, 21129 Hamburg (DE)
(72) Inventor: Robrecht, Volker, 21129 Hamburg (DE); Ruppert, Bernd, 21129 Hamburg (DE)
(74) Representative: Isarpatent

(56) References cited:
- WO-A1-2011/053170
- WO-A1-2012/166532
- WO-A1-2012/166552

## Description

The present invention relates to a fastening element, a fastening assembly and a method for manufacturing a fastening element, in particular by using additive manufacturing (AM) and/or fused deposition modelling (FDM).

The fastening element is configured to be fastened in components, for example in components of landborne, waterborne or airborne vehicles. Although applicable to various kinds of fastening arrangements, the present invention and the problem on which it is based will be explained in greater detail with reference to commercial aircraft.

In contemporary aircraft a plurality of fastening or holding devices are used to attach various components such as cables, pipes, or others, to structures of the aircraft. These fastening devices may rely on conventional fastening means like bolts, screws, rivets, pins or plugs or the like. In addition, special fastening elements may be employed like for example clips, clamps or adhesive holders. Due to the highly complex technical infrastructure of modern aircraft, usually thousands of different holders and other fastening devices have to be installed inside the aircraft. Hence, any weight reduction per fastening device can have significant impact on aircraft load and, in consequence, fuel consumption. In addition, it is desirable to minimize the production and installation effort for these elements as far as possible.

3D printing provides extraordinary design freedom and hence it is widely used for manufacturing with multiple applications in engineering, construction, industrial design, automotive industries, and aerospace industries. Amongst various advantages, it offers the possibility to manufacture complex hollow structures in one piece that are much more cumbersome to produce with conventional manufacturing methods. Conventional methods often do not allow to produce hollow objects in an integral way at all, but require to assemble these from a number of individual subcomponents.

Document WO 2012/166552 A1 discloses fasteners manufactured by three-dimensional printing. The document teaches integrally formed fasteners with deflection portions at a surface region of a fastening element that resiliently deform into open hollow portions or undercuts or the like upon application of external forces to the deflection portion.

Document WO 2011/053170 A1 discloses flexible spring fasteners.

Document WO 2012/166532 A1 discloses spiral fasteners and methods of manufacturing such fasteners.

It is one object of the present invention to provide solutions for fastening devices, which feature a lightweight, cost efficient design while offering ease of installation and intended fastening strength.

This object is achieved by a fastening element having the features of claim 1, a fastening assembly having the features of claim 10, and a method for manufacturing a fastening element having the features of claim 13.

According to a first aspect of the invention, a fastening element for fastening in components comprises at least one cavity being integrally formed within an inner region of the fastening element separated from the outside by a corresponding deflection portion being integrally formed at a surface region of the fastening element proximate to the at least one cavity. Herein the deflection portion is configured to resiliently deform into the cavity upon application of external forces to the deflection portion.

According to a second aspect of the invention, a fastening assembly comprises a fastening element according to the first aspect of the invention and an engagement component with a fastening hole. Herein the fastening hole is shaped to engage with the fastening element upon insertion of the fastening element into the fastening hole by resiliently deforming the at least one deflection portion into the at least one cavity.

According to a third aspect of the invention, a method for manufacturing a fastening element comprises manufacturing a fastening element with at least one cavity and at least one deflection portion using an AM or 3D printing technique. The at least one cavity is integrally formed within an inner region of the fastening element separated from the outside by a corresponding deflection portion being integrally formed at a surface region of the fastening element proximate to the at least one cavity. The deflection portion is configured to resiliently deform into the cavity upon application of external forces to the deflection portion.

One idea of the present invention is to make use of the design freedom of 3D printing techniques to provide a lightweight fastening component with inner hollow structures and corresponding outer deflection portions. Due to the interplay of the elastic deflection portions and the hollow structures, various fastening methods can be integrated into such a fastening element. When used together with a correspondingly designed engagement component, various fastenings can be achieved through the interference of the fastening element and the engagement component, like for example friction fits or form fits, that exhibit high strength and tightness of fit. The hollow structures can further serve to reduce the weight of the fastening element. Using 3D printing processes even complexly structured fastening elements may be manufactured as integral objects in cost and time efficient production manner. Fastening elements according to the present invention can either replace and/or complement various conventional fastening means, e.g. standard clip systems or bolted connections.

In general, the solution of the invention offers great advantages for 3D printing or AM technology since 3D components may be printed without the additional need for subjecting the components or objects to further processing steps such as milling, cutting or drilling. This allows for a more efficient, material saving and time saving manufacturing process.

Particularly advantageous in general is the reduction of costs, weight, lead time, part count and manufacturing complexity coming along with employing AM technology for printing fastening components or other objects used for, employed in or being part of airborne vehicles. Moreover, the geometric shape of the printed structural components or objects may be flexibly designed with regard to the intended technical purpose of parts or regions of the component/object.

Advantageous embodiments and improvements of the present invention are found in the subordinate claims.

According to an embodiment of the fastening element, the fastening element comprises at least two cavities and correspondingly arranged deflection portions. Thus, the fastening element can comprise two, three, or a plurality of cavities and deflection sections. These can be arranged in widely varied and advantageous ways at the fastening element to provide optimal fastening properties as required by each particular use case.

The at least two cavities and the deflection portions may be shaped identically. For example, the fastening element may feature a number of identically shaped cavities and correspondingly arranged deflection portions for a particularly simple fastening solution.

According to a further embodiment of the fastening element, the fastening element is pin-shaped. The fastening element may have, for example, the general shape of a circular cylinder with accordingly arranged cavities and deflection sections. In this particular configuration, the fastening element may be provided for correspondingly shaped fastening holes in components, e.g. structural components of an aircraft.

The at least one cavity may be arranged close to the outer perimeter of the fastening element. The at least one deflection portion may be formed as a stud protruding from the outer perimeter of the fastening element. One simple embodiment of the fastening element could have the shape of a circular cylinder with a plurality of cavities and deflection portions arranged regularly alongside the cylinder. The fastening element could be configured to be attached inside a corresponding circular fastening hole in an engagement structure or component. For example, the fastening element can be configured to be fitted into the fastening hole by sliding the fastening element into the fastening hole. In doing so, the deflection portions of the fastening element are pushed into the cavities by an inner wall of the fastening hole. Due to the resilient nature of the deflection portions, these try to get back into their original positions and hence apply a force against the inner wall of the fastening hole. In effect, this leads to a friction fit between the fastening element and the fastening hole. The installation of such a fastening element can be achieved in a particularly efficient and simple way without having to accept any compromise with regards to fastening strength.

According to a further embodiment of the fastening element, the at least one cavity may have the shape of a hollow cylinder arranged around the longitudinal axis of the fastening element. The at least one deflection portion may be formed as a ring protruding from the outer perimeter of the fastening element. Apart from this particular shape, the fastening element may be configured in a similar way as in the embodiment above. As in the case of stud-like deflection portions, the fastening element engages with a fastening hole upon insertion of the fastening element into the fastening hole. The inner wall of the fastening hole pushes the ring-like deflection portions into the circumferential cavities. The deflection portions then push back against the inner wall and hence generate a friction force resisting any further movement of the fastening element into or out of the fastening hole. Hence, a friction fit is achieved. The cavities may be shaped like a hollow cylinder, wherein the longitudinal axis of the fastening element constitutes the cylinder axis. The thickness of the cylinder wall hereby corresponds to the depth of the cavity towards the longitudinal axis into which the deflection portion is pushed.

According to a further embodiment of the fastening element, the fastening element further comprises a head portion which is formed as a hollow shell with one cavity at the center surrounded by an outer wall as deflection portion. The head portion may have the outer shape of a circular cone or truncated cone. This embodiment is particularly suited for a "snap&click" functionality of the fastening element. The shape of the head portion can be chosen according to the particular application. As 3D printing techniques even allow to manufacture components with hollow structures and/or undercuts without any support material or the like, various functional elements can be realized without any special production effort. The hollow structures and/or undercuts can be designed to facilitate the resilient behavior of the fastening element in order to achieve a fit with a component.

According to a further embodiment of the fastening element, the fastening element is formed using an additive manufacturing or 3D printing technique. Free form fabrication (FFF), direct manufacturing (DM), fused deposition modelling (FDM), powder bed printing (PBP), laminated object manufacturing (LOM), stereolithography (SL), selective laser sintering (SLS), selective laser melting (SLM), selective heat sintering (SHS), electron beam melting (EBM), direct ink writing (DIW), digital light processing (DLP) and additive layer manufacturing (ALM) belong to a general hierarchy of additive manufacturing (AM) methods, generally termed as 3D printing techniques. Those systems are used for generating three-dimensional objects based on digital model data by creating a cross-sectional pattern of the object to be formed and forming the three-dimensional solid object by sequentially building up layers of material. Any of such procedures will be referred to in the following description as AM or 3D printing without loss of generality. AM or 3D printing techniques usually include selectively depositing material layer by layer, selectively fusing or solidifying the material and removing excess material, if needed. 3D printing is currently used for prototyping and distributed manufacturing with multiple applications in engineering, construction, industrial design, automotive industries and aerospace industries.

The structural component may be integrally formed from metal, ceramic, polymer or composite material or the like. By using AM processes, even highly complex three-dimensional components can be produced in a relatively straightforward manner. The AM process allows to combine several materials and integrally form components of a mixture of different materials. For example, special reinforced fastening element may be provided for us in load carrying areas. Depending on the application, different tradeoffs between stiffness and weight would be preferred. The material thickness could be increased or decreased depending on the load situation. In another example, the mixture of materials may be chosen to optimize the elasticity of the deflection portions in order to facilitate a quick and easy installation of the fastening element.

According to an embodiment of the fastening assembly, in the fastened condition the at least one deflection portion of the fastening element is pushed into the at least cavity by an inner wall of the fastening hole and forms a friction fit between the fastening element and the engagement component. A friction fit is one example for a very simple but nevertheless relatively tight fastening technique. This kind of fastening element may be used for example as security function for standard clip systems or the like.

According to a further embodiment of the fastening assembly, in the fastened condition the at least one deflection portion of the fastening element snaps back into a complementarily formed recess in the inner wall of the fastening hole and forms a form fit between the fastening element and the engagement component. This embodiment can serve as an alternative to the friction fit solution mentioned above. However, a combined solution of friction fit and form fit is also possible. In this case, a fraction of the cavities and deflection portions establish a form fit with correspondingly shaped recesses in the inner wall of the fastening hole. The remaining deflection portions may be arrange to reinforce this form fit by pushing against the inner wall thereby creating an additional friction fit with the engagement component.

According to an embodiment of the method, the 3D printing technique comprises fused deposition modelling. Fused Deposition Modelling (FDM) processes within the meaning of the present disclosure comprise processes used to build a three-dimensional part or component from a digital representation of the three-dimensional part by extruding flowable material layer-by-layer and depositing the material as a sequence of tracks on previously deposited material, so that upon a drop in temperature the deposited material of the tracks fuses with the previously deposited material.

A computer-readable medium according to a further aspect of the invention may comprise computer-executable instructions which, when executed on a data processing apparatus, cause the data processing apparatus to perform a method according to the invention.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.
Fig. 1 schematically illustrates a fastening element and a fastening assembly according to an embodiment of the invention.
Fig. 2 schematically illustrates a fastening element and a fastening assembly according to another embodiment of the invention.
Fig. 3 schematically illustrates a fastening element and a fastening assembly according to a further embodiment of the invention.
Fig. 4 schematically illustrates a fastening element and a fastening assembly according to another embodiment of the invention.
Fig. 5 schematically illustrates a flow diagram of a method for manufacturing a fastening element according to another embodiment of the invention.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

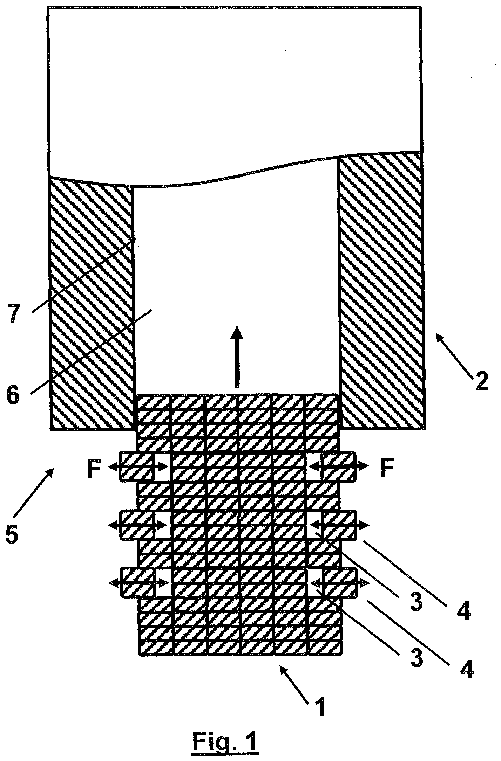

Fig. 1 schematically illustrates a fastening element and a fastening assembly according to an embodiment of the invention.

On Fig. 1 reference sign 1 denotes a fastening element and reference sign 2 denotes a corresponding engagement component 2 of a fastening assembly 5. All devices are shown in cross sectional view so as to better illustrate the principles of the depicted exemplary embodiment of the invention. The engagement component 2 may be a structural component of an aircraft. However, the present invention is not confined to this kind of use case and can be utilized in various technical fields and applications, like landborne, airborne or waterborne vehicles, stationary objects etc. The present invention can be used in a very general way to fasten different devices, components or structures with each other. In general, the present invention provides in one aspect a fastening element for fastening in components and in another aspect a fastening assembly of such a fastening element and an engagement component.

This exemplary fastening element 1 is pin-shaped with the general profile of a circular cylinder. The fastening element 1 includes a plurality of cavities 3 integrally formed within an inner region of the fastening element 1. In particular, the cavities 3 are arranged close to the outer perimeter of the fastening element 1 one after another along its longitudinal axis. Each cavity 3 is separated from the outside by a corresponding deflection portion 4 being integrally formed at a surface region of the fastening element 1. For example, the cavities 3 may be formed as hollow cylindrical structures around the longitudinal axis of the fastening element 1. Accordingly, the deflection portions 4 may then be formed as rings protruding from the outer perimeter of the fastening element 1. However, the cavities 3 and the deflection portions 4 may be shaped and/or arranged in alternative configurations. For example, the fastening element 1 may have the general shape of a pin with a profile according to the outer shape of a star polygon or the like, wherein the jags of the star are formed by the deflection elements 4. Alternatively, the basic profile of the fastening element 1 may be circular, i.e. the fastening element 1 has the basic shape of a circular cylinder, and the deflection portions 4 may be arranged in a regular pattern around the circumference of the circle thereby forming a wave-like or star-like boundary of the profile of the fastening element 1. In all of these cases the cavities 3 are formed inside the fastening element 1 close to the outer perimeter of the fastening element 1. The fastening element 1 may be connected to further structures or devices (not depicted), which can be coupled to the engagement component 2 through the fastening element 1.

This exemplary engagement component 2 is formed with an engagement hole 6. The engagement hole 6 has a circular profile with a correspondingly shaped inner wall 7. The engagement hole 6 may be embedded in a component of a vehicle, stationary object or other structure.

The deflection portions 4 of the fastening elements 1 are configured to resiliently deform into the respective cavity 3 upon application of external forces F to the deflection portions 4. Hence, each deflection portion 4 is pushed into the respective cavity 3 when the fastening element 1 is inserted into the fastening hole 6. Due to the resilient configuration of the deflection portions 4, a restoring force pushes the deflection portions 4 against the inner wall 7 of the fastening hole 6, which in consequence leads to a friction fit between the fastening element 1 and the engagement component 2.

Both the fastening element 1 and the engagement component 2 may be manufactured using an additive manufacturing or 3D printing method. In particular, both devices may be formed using fused deposition modelling. As these methods allow to produce objects from various materials, like for example metal and polymers, such a fastening element 1 may replace conventional fastening means like screws, bolts, clamps, clips or the like.

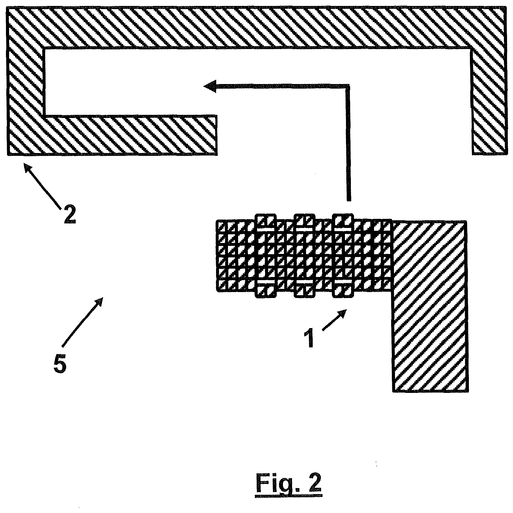

Fig. 2 schematically illustrates a fastening element 1 and a fastening assembly 5 according to another embodiment of the invention. The fastening element 1 itself is very similar to the one depicted in Fig. 1. However, in this case the engagement component 2 is configured slightly differently. The depicted fastening assembly 5 may be part of a clip system or the like. By inserting the fastening element 1 from below up into the engagement component 2, any device connected to the fastening element 1 may be secured into the engagement component 2 or any structure coupled to the latter. This exemplary embodiment of the present invention may be used for example as a security attachment for standard clip systems or the like.

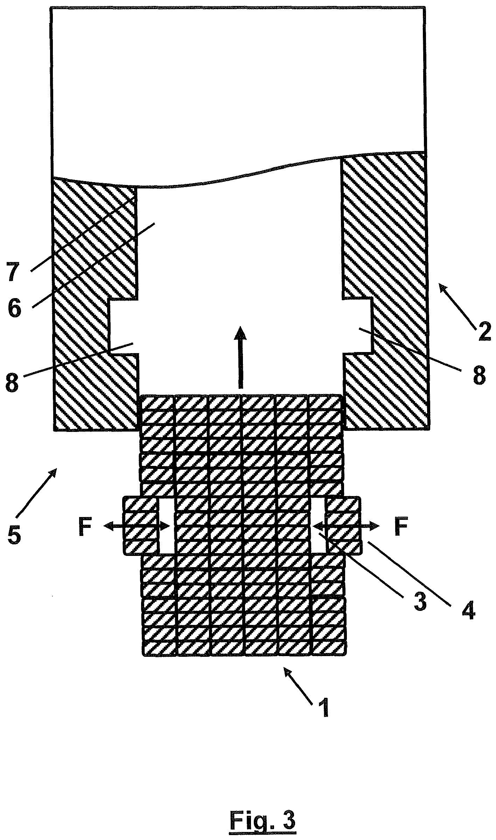

Fig. 3 schematically illustrates a fastening element 1 and a fastening assembly 5 according to a further embodiment of the invention. The basic configuration of the fastening element 1 is the same as the one shown in Figs. 1 and 2. However in this case, only one larger cavity 3 in the shape of a hollow cylinder and ring-shaped deflecting portion 4 are formed into the fastening element 1. The inner wall 7 of the engagement component 2 features a recess 8 that is complementarily formed to the deflection portion 4. Hence, if the fastening element 1 is inserted into the fastening hole 6 of the engagement component 2, the deflection portion 4 is first pushed into the cavity and then snaps back into the recess 8. Thus, a form fit is achieved between the fastening element 1 and the engagement component 2.

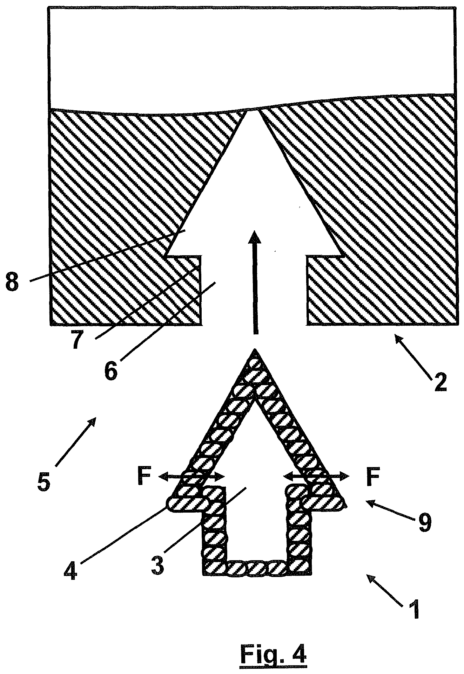

Fig. 4 schematically illustrates a fastening element 1 and a fastening assembly 5 according to another embodiment of the invention.

In this embodiment, the fastening element 1 is provided with a head portion 9 which is formed as a hollow shell with one cavity 3 at the center surrounded by an outer wall as deflection portion 4. The head portion 9 has the outer shape of a circular cone. The engagement component 2 is formed with a corresponding fastening hole 6 and complementarily configured recess 8. When pushed into the fastening hole 6, the head portion 9 of the fastening element 1 is compressed. Once inside the fastening hole 6 with its recess 8, the head portion 9 and its deflection portion 4 snaps back and thus "clicks into" the engagement component 2.

The fastening element 1 and the engagement component 2 of this exemplary embodiment of the invention can both be printed in 3D printing technique like fused deposition modelling. Support material to sustain any undercuts or hollow structures is not needed due to the particular shape of the components.

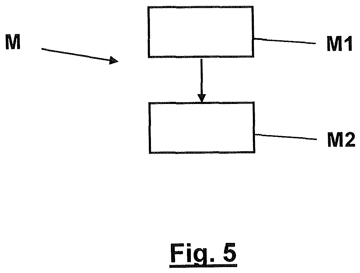

Fig. 5 schematically illustrates a flow diagram of a method M for manufacturing a fastening element 1 according to another embodiment of the invention.

The method M comprises at M1 manufacturing a fastening element 1 with at least one cavity 3 and at least one deflection portion 4 using an AM or 3D printing technique. This embodiment of the method M optionally further includes at M2 manufacturing an engagement component 2 with a fastening hole 6 using an AM or 3D printing technique.

In both steps of the method M, fused deposition modelling may be used to form the components. The fastening element as well as the engagement component may be printed "in one go", i.e. the whole component may be integrally printed in a single printing procedure. The FDM printing technique is particularly appealing for any structures that do not have inherent overhang angles or undercuts above a predetermined manufacturing threshold. However, even in case there are undercuts or overhang angles, FDM can be used under appropriate arrangement of the component, as long as the shape of the component is self-supporting during integral printing. The printing direction may be determined in such a way that no surface encloses an overhang angle above the predetermined manufacturing threshold. For example, cubic structures may be printed with the printing direction oriented along a diagonal line between two diametrically opposite vertices of the cube so that the overhang angle of the surface to be printed will not exceed 45°. Hence for example, the fitting elements depicted in Figs. 1 to 4 can be manufactured with FDM.

The embodiments were chosen and described in order to best explain the principles of the invention and its practical applications, to thereby enable others skilled in the art to best utilize the invention and various embodiments with various modifications as are suited to the particular use contemplated. Many other examples will be apparent to one skilled in the art upon reviewing the above specification.

### List of reference signs

- 1: fastening element
- 2: engagement component
- 3: cavity
- 4: deflection portion
- 5: fastening assembly
- 6: fastening hole
- 7: inner wall
- 8: recess
- 9: head portion

- F: force

- M: method
- M1: method step
- M2: method step

## Claims

1. Fastening element (1) for fastening in components (2), comprising:
at least one cavity (3) being integrally formed within an inner region of the fastening element (1) separated from the outside by a corresponding deflection portion (4) being integrally formed at a surface region of the fastening element (1) proximate to the at least one cavity (3);
wherein the deflection portion (4) is configured to resiliently deform into the cavity (3) upon application of external forces (F) to the deflection portion (4).

2. Fastening element (1) according to claim 1,
comprising at least two cavities (3) and correspondingly arranged deflection portions (4).

3. Fastening element (1) according to claim 2,
wherein the at least two cavities (3) and the deflection portions (4) are shaped identically.

4. Fastening element (1) according to one of the preceding claims,
wherein the fastening element (1) is pin-shaped.

5. Fastening element (1) according to claim 4,
wherein the at least one cavity (3) is arranged close to the outer perimeter of the fastening element (1) and wherein the at least one deflection portion (4) is formed as a stud protruding from the outer perimeter of the fastening element (1).

6. Fastening element (1) according to claim 4,
wherein the at least one cavity (3) has the shape of a hollow cylinder arranged around the longitudinal axis of the fastening element (1) and wherein the at least one deflection portion (4) is formed as a ring protruding from the outer perimeter of the fastening element (1).

7. Fastening element (1) according to one of the preceding claims, further comprising:
a head portion (9) which is formed as a hollow shell with one cavity (3) at the center surrounded by an outer wall as deflection portion (4).

8. Fastening element (1) according to claim 7,
wherein the head portion (9) has the outer shape of a circular cone or truncated cone.

9. Fastening element (1) according to one of the preceding claims,
wherein the fastening element (1) is formed using an additive manufacturing, AM, or 3D printing technique.

10. Fastening assembly (5), comprising:
a fastening element (1) according to one of the preceding claims; and
an engagement component (2) with a fastening hole (6);
wherein the fastening hole (6) is shaped to engage with the fastening element (1) upon insertion of the fastening element (1) into the fastening hole (6) by resiliently deforming the at least one deflection portion (4) into the at least one cavity (3).

11. Fastening assembly (5) according to claim 10,
wherein in the fastened condition the at least one deflection portion (4) of the fastening element (1) is pushed into the at least cavity (3) by an inner wall (7) of the fastening hole (6) and forms a friction fit between the fastening element (1) and the engagement component (2).

12. Fastening assembly (5) according to claim 10 or 11,
wherein in the fastened condition the at least one deflection portion (4) of the fastening element (1) snaps back into a complementarily formed recess (8) in the inner wall (7) of the fastening hole (6) and forms a form fit between the fastening element (1) and the engagement component (2).

13. Method (M) for manufacturing a fastening element (1) for fastening in components (2), the method (M) comprising:
manufacturing (M1) a fastening element (1) with at least one cavity (3) and at least one deflection portion (4) using an AM or 3D printing technique,
wherein the at least one cavity (3) is integrally formed within an inner region of the fastening element (1) separated from the outside by a corresponding deflection portion (4) being integrally formed at a surface region of the fastening element (1) proximate to the at least one cavity (3); wherein the deflection portion (4) is configured to resiliently deform into the cavity (3) upon application of external forces (F) to the deflection portion (4).

14. Method (M) according to claim 13,
wherein the 3D printing technique comprises fused deposition modelling, FDM.

15. Computer-readable medium comprising computer-executable instructions which, when executed on a data processing apparatus, cause the data processing apparatus to perform a method according to claim 13 or 14.

## Patentansprüche

1. Befestigungselement (1) zum Befestigen von Bauteilen (2), Folgendes umfassend:
mindestens einen Hohlraum (3) der innerhalb eines inneren Bereichs des Befestigungselements (1) von der Außenseite durch einen zugehörigen Ablenkabschnitt (4), der in einem Flächenbereich des Befestigungselements (1) in der Nähe des mindestens einen Hohlraums (3) integral ausgebildet ist, getrennt ist, integral ausgebildet ist;
wobei der Ablenkabschnitt (4) dazu ausgelegt ist, sich bei Einwirkung von äußeren Kräften (F) auf den Ablenkabschnitt (4) elastisch in den Hohlraum (3) zu verformen.

2. Befestigungselement (1) nach Anspruch 1,
mindestens zwei Hohlräume (3) und zugehörig angeordnete Ablenkabschnitte (4) umfassend.

3. Befestigungselement (1) nach Anspruch 2,
wobei die mindestens zwei Hohlräume (3) und die Ablenkabschnitte (4) identisch geformt sind.

4. Befestigungselement (1) nach einem der vorstehenden Ansprüche,
wobei das Befestigungselement (1) stiftförmig ist.

5. Befestigungselement (1) nach Anspruch 4,
wobei der mindestens eine Hohlraum (3) in der Nähe des Außenrands des Befestigungselements (1) angeordnet ist und wobei der mindestens eine Ablenkabschnitt (4) als Bolzen ausgebildet ist, der vom Außenrand des Befestigungselements (1) vorsteht.

6. Befestigungselement (1) nach Anspruch 4,
wobei der mindestens eine Hohlraum (3) die Form eines Hohlzylinders aufweist, der um die Längsachse des Befestigungselements (1) angeordnet ist, und wobei der mindestens eine Ablenkabschnitt (4) als Ring ausgebildet ist, der vom Außenumfang des Befestigungselements (1) vorsteht.

7. Befestigungselement (1) nach einem der vorstehenden Ansprüche, ferner Folgendes umfassend:
einen Kopfabschnitt (9), der als hohle Schale mit einem Hohlraum (3) in der Mitte, von einer Außenwand als Ablenkabschnitt (4) umgeben, ausgebildet ist.

8. Befestigungselement (1) nach Anspruch 7,
wobei der Kopfabschnitt (9) die Außenform eines Kreiskegels oder eines Kegelstumpfs aufweist.

9. Befestigungselement (1) nach einem der vorstehenden Ansprüche,
wobei das Befestigungselement (1) unter Verwendung eines additiven Fertigungs(Additive Manufacturing, AM)- oder 3D-Druck-Verfahrens ausgebildet wird.

10. Befestigungsanordnung (5), Folgendes umfassend:
ein Befestigungselement (1) nach einem der vorstehenden Ansprüche; und
ein Eingriffsbauteil (2) mit einer Befestigungsbohrung (6) ;
wobei die Befestigungsbohrung (6) derart geformt ist, um beim Einsetzen des Befestigungselements (1) in die Befestigungsbohrung (6) durch elastisches Verformen des mindestens einen Ablenkabschnitts (4) in den mindestens einen Hohlraum (3) in das Befestigungselement (1) einzugreifen.

11. Befestigungsanordnung (5) nach Anspruch 10,
wobei der mindestens eine Ablenkabschnitt (4) des Befestigungselements (1) im befestigten Zustand durch eine Innenwand (7) der Befestigungsbohrung (6) in den mindestens einen Hohlraum (3) gedrückt wird und eine Presspassung zwischen dem Befestigungselement (1) und dem Eingriffsbauteil (2) ausbildet.

12. Befestigungsanordnung (5) nach Anspruch 10 oder 11, wobei der mindestens eine Ablenkabschnitt (4) des Befestigungselements (1) im befestigten Zustand in eine zugehörig ausgebildete Aussparung (8) in der Innenwand (7) der Befestigungsbohrung (6) einrastet und einen Formschluss zwischen dem Befestigungselement (1) und dem Eingriffsbauteil (2) ausbildet.

13. Verfahren (M) zur Herstellung eines Befestigungselements (1) zum Befestigen in Bauteilen (2), wobei das Verfahren (M) Folgendes umfasst:
Herstellen (M1) eines Befestigungselements (1) mit mindestens einem Hohlraum (3) und mindestens einem Ablenkabschnitt (4) unter Verwendung eines AM- oder 3D-Druck-Verfahrens, wobei der mindestens eine Hohlraum (3) innerhalb eines inneren Bereichs des Befestigungselements (1) von der Außenseite durch einen zugehörigen Ablenkabschnitt (4), der in einem Flächenbereich des Befestigungselements (1) in der Nähe des mindestens einen Hohlraums (3) integral ausgebildet ist, getrennt ist, integral ausgebildet ist; wobei der Ablenkabschnitt (4) dazu ausgelegt ist, sich bei Einwirkung äußerer Kräfte (F) auf den Ablenkabschnitt (4) elastisch in den Hohlraum (3) zu verformen.

14. Verfahren (M) nach Anspruch 13,
wobei das 3D-Druck-Verfahren Fused Deposition Modeling (Schmelzschichtung, FDM) umfasst.

15. Computerlesbares Medium, das computerausführbare Anweisungen umfasst, die, wenn sie auf einer Datenverarbeitungsvorrichtung ausgeführt werden, bewirken, dass die Datenverarbeitungsvorrichtung ein Verfahren nach Anspruch 13 oder 14 durchführt.

## Revendications

1. Élément de fixation (1) pour la fixation dans des composants (2), comprenant :
au moins une cavité (3) formée d'un seul tenant à l'intérieur d'une région intérieure de l'élément de fixation (1) séparée de l'extérieur par une partie de déflexion (4) correspondante formée d'un seul tenant au niveau d'une région de surface de l'élément de fixation (1) proche de l'au moins une cavité (3) ;
dans lequel la partie de déflexion (4) est configurée pour se déformer élastiquement à l'intérieur de la cavité (3) lors de l'application de forces externes (F) à la partie de déflexion (4).

2. Élément de fixation (1) selon la revendication 1,
comprenant au moins deux cavités (3) et des parties de déflexion (4) agencées de manière correspondante.

3. Élément de fixation (1) selon la revendication 2,
dans lequel lesdites au moins deux cavités (3) et les parties de déflexion (4) sont de forme identique.

4. Élément de fixation (1) selon l'une des revendications précédentes, dans lequel l'élément de fixation (1) est en forme de goupille.

5. Élément de fixation (1) selon la revendication 4,
dans lequel l'au moins une cavité (3) est agencée près du périmètre extérieur de l'élément de fixation (1) et dans lequel l'au moins une partie de déflexion (4) est formée en tant que tige faisant saillie à partir du périmètre extérieur de l'élément de fixation (1) .

6. Élément de fixation (1) selon la revendication 4,
dans lequel l'au moins une cavité (3) présente la forme d'un cylindre creux agencé autour de l'axe longitudinal de l'élément de fixation (1) et dans lequel l'au moins une partie de déflexion (4) est formée en tant que bague faisant saillie à partir du périmètre extérieur de l'élément de fixation (1).

7. Élément de fixation (1) selon l'une des revendications précédentes, comprenant en outre :
une partie tête (9) qui est formée en tant qu'enveloppe creuse dotée d'une cavité (3) au centre entourée par une paroi extérieure en tant que partie de déflexion (4).

8. Élément de fixation (1) selon la revendication 7,
dans lequel la partie tête (9) présente la forme extérieure d'un cône circulaire ou d'un cône tronqué.

9. Élément de fixation (1) selon l'une des revendications précédentes,
dans lequel l'élément de fixation (1) est formé à l'aide d'une technique de fabrication additive, AM, ou d'impression 3D.

10. Ensemble de fixation (5), comprenant :
un élément de fixation (1) selon l'une des revendications précédentes ; et
un composant d'entrée en prise (2) doté d'un trou de fixation (6) ;
dans lequel le trou de fixation (6) est formé pour entrer en prise avec l'élément de fixation (1) lors de l'insertion de l'élément de fixation (1) à l'intérieur du trou de fixation (6) par déformation élastique de l'au moins une partie de déflexion (4) à l'intérieur de l'au moins une cavité (3).

11. Ensemble de fixation (5) selon la revendication 10,
dans lequel, dans l'état fixé, l'au moins une partie de déflexion (4) de l'élément de fixation (1) est poussée à l'intérieur de l'au moins une cavité (3) par une paroi intérieure (7) du trou de fixation (6) et forme un ajustement à friction entre l'élément de fixation (1) et le composant d'entrée en prise (2).

12. Ensemble de fixation (5) selon la revendication 10 ou 11,
dans lequel, dans l'état fixé, l'au moins une partie de déflexion (4) de l'élément de fixation (1) s'encliquète dans un évidement (8) formé de manière complémentaire dans la paroi intérieure (7) du trou de fixation (6) et forme un ajustement par complémentarité de forme entre l'élément de fixation (1) et le composant d'entrée en prise (2).

13. Procédé (M) de fabrication d'un élément de fixation (1) pour la fixation dans des composants (2), le procédé (M) comprenant :
la fabrication (M1) d'un élément de fixation (1) doté d'au moins une cavité (3) et d'au moins une partie de déflexion (4) à l'aide d'une technique AM ou d'impression 3D, dans lequel l'au moins une cavité (3) est formée d'un seul tenant à l'intérieur d'une région intérieure de l'élément de fixation (1) séparée de l'extérieur par une partie de déflexion (4) correspondante formée d'un seul tenant au niveau d'une région de surface de l'élément de fixation (1) proche de l'au moins une cavité (3) ; dans lequel la partie de déflexion (4) est configurée pour se déformer élastiquement à l'intérieur de la cavité (3) lors de l'application de forces externes (F) à la partie de déflexion (4) .

14. Procédé (M) selon la revendication 13,
dans lequel la technique d'impression 3D comprend le dépôt de fil fondu, FDM.

15. Support lisible par ordinateur comprenant des instructions exécutables par ordinateur qui, lorsqu'elles sont exécutées sur un appareil de traitement de données, amènent l'appareil de traitement de données à mettre en œuvre un procédé selon la revendication 13 ou 14.
